(19) Europäisches Patentamt
European Patent Office
Office européen des brevets

(11) **EP 4 763 648 A1**

(12) **EUROPEAN PATENT APPLICATION**

(43) Date of publication:
**24.06.2026 Bulletin 2026/26**

(21) Application number: **25225034.5**

(22) Date of filing: **18.12.2025**

(51) International Patent Classification (IPC):
**B60W 30/18** (2012.01)    **B60W 40/064** (2012.01)
**B60W 40/068** (2012.01)

(52) Cooperative Patent Classification (CPC):
**B60W 40/064; B60W 30/18054; B60W 40/068;**
B60W 10/04; B60W 10/184; B60W 2040/1307;
B60W 2050/0041; B60W 2510/0657;
B60W 2510/0695; B60W 2510/083;
B60W 2510/088; B60W 2520/26; B60W 2520/28;
B60W 2520/30; B60W 2530/10;          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.12.2024 IT 202400029262**

(71) Applicant: **Automobili Lamborghini S.P.A.
40019 Sant'Agata Bolognese (BO) (IT)**

(72) Inventor: **CONGESTRI', Andrea
41126 San Damaso (Modena) (IT)**

(74) Representative: **Puggioli, Tommaso
Bugnion S.p.A.
Via di Corticella, 87
40128 Bologna (IT)**

(54) **METHOD AND VEHICLE**

(57)    The invention relates to an estimation method for estimating a value of grip limit of a tyre (2A) of a vehicle (1) comprising a plurality of tyres (2), the estimation method comprising:
- defining a stationary vehicle condition,
- provide a driving torque (Tm) to a first tyre (2A) of the plurality of tyres,
- increasing the driving torque (Tm) provided until the first tyre (2A) reaches a skid condition,
- measuring at least one rotation speed (Vr) of the first tyre (2A) at the skid condition,
- determining a value of driving torque (Tm) at the rotation speed measured,
- determining the value of grip limit ($\mu$) at least as a function of the measured rotation speed (Vr) and of the determined driving torque (Tm), said estimation method further comprising deriving the value of grip limit ($\mu$) and establishing a reference range for said derived value of grip limit ($\delta\mu$), the estimation method comprising selecting the value of driving torque (Tm) corresponding to the value of derived grip limit ($\delta\mu$) within the reference range.

The invention further relates to a corresponding vehicle.

Fig.1

(52) Cooperative Patent Classification (CPC): (Cont.)
B60W 2530/201; B60W 2720/30

**Description**

The present invention relates to a method of estimating a value of grip limit of a tyre and a vehicle.

The reference sector of the present invention is the automotive sector in which there are prior art methods for estimating the limit adhesion, or grip, of a tyre on different surfaces, which is used especially in sports or super sports cars.

In general, the prior art methods record any skidding of the tyres when the vehicle is in motion, detecting such behaviour with sensors.

Disadvantageously, the prior art methods do not provide sufficiently accurate estimates and do not give precise indications of the behaviour of the tyres in a specific area, for example on a track.

These precise measurements can be particularly useful when it is necessary to determine the starting conditions of the vehicle and in the use of launch control systems, where the measurement of the grip on a particular point of the track is essential to allow an optimal start and deliver the maximum possible torque.

Patent document US2019248370A1 describes a system that provides for the controlled preheating of the tyres before the launch of a stationary vehicle, rotating the wheels with the brakes applied and adjusting the driving torque according to the real-time readings of the pressure sensors. The pressure is used to estimate the tyre temperature and keep it at the optimum value to maximise the coefficient of friction and traction during the start.

Patent document US2018217050 illustrates a method for testing and determining the coefficient of friction between a wheel of a vehicle and the surface with which it is in contact. The method comprises performing active dynamic tests, which include commanding the vehicle to perform one or more of the following: applying propulsive torque, regenerative torque or braking torque on at least one wheel of the vehicle, receiving a parameter measured by the wheel during the test and calculating a value of $\mu$ of the surface for the area of interest. The Applicant has found there is the need to improve these prior art methods in particular in terms of accuracy and performance of the vehicle.

In particular, an aim of the present invention to provide a method for estimating the value of grip limit of a tyre of a vehicle and a vehicle, capable of satisfying at least the above-mentioned needs.

This aim is achieved by a method of estimating the value of grip limit of a tyre and a vehicle comprising the technical characteristics set forth in one or more of the accompanying claims.

The dependent claims correspond to possible different embodiments of the invention.

According to one aspect of the invention, the invention relates to a method of estimating a value of grip limit of a tyre of a vehicle comprising a plurality of tyres.

The estimation method comprises defining a stationary vehicle condition. Preferably, defining a stationary vehicle condition comprises locking all the tyres of the plurality of tyres.

In one example, locking all tyres comprises locking all tyres with a braking system.

The tyres may be lockable independently of each other.

The fundamental condition is that the vehicle is in a stopped condition. The method comprises unlocking at least one tyre of the plurality of tyres, in particular if all of them have been locked.

For example, the brake can be released only on the tyre whose grip or limit adherence is to be determined.

In one example, if the vehicle is an automobile, three tyres are braked and one tyre is not braked.

In one example, if the vehicle is a motorcycle, one tyre is braked and one tyre is not braked.

The method comprises providing a driving torque at least to the unlocked tyre.

The unlocked tyre may be a tyre that has been locked to define the stationary vehicle condition and is unlocked or also a tyre that has remained unlocked in defining the stationary vehicle condition, for example because it has not been braked.

Providing a driving torque to the tyre can be carried out by driving the vehicle, for example by means of an electric motor or by using any means of propulsion.

The torque can be provided to the single tyre for which the limit adherence is to be determined or to all the tyres, by braking the tyres not subject to the test.

The method comprises increasing the driving torque provided until the unlocked tyre reaches a skid condition.

Preferably, the driving torque is increased in a linear manner.

In other examples, the driving torque is increased following different patterns with respect to a linear profile.

A skid condition means a relative movement between a tyre and the road surface with which the tyre is in contact.

Advantageously, knowing the grip value of the tyre and therefore the skid conditions allows the acceleration, start, braking and curvature performance of the vehicle to be optimised.

The method comprises measuring at least one rotation speed of the unlocked tyre at the skid condition.

The method comprises determining at least one torque value at the rotation speed measured.

The method comprises determining the limit adherence value at least as a function of the rotation speed measured and the value of the driving torque determined.

Advantageously, determining the value of grip limit as a function of the rotation speed measured at that point and the value of the torque that brought the tyre into motion allows an accurate and precise grip value to be estimated at the position and surface where the vehicle is located.

Following the increase in driving torque, a grip saturation value of the tyre will be reached, which will begin to move by rotating.

Advantageously, this method makes it possible to make a precise estimate of the grip limit of the vehicle, determining the optimal starting conditions of the vehicle to be used in the launch control in order to deliver the maximum possible torque.

The method comprises deriving the limit adherence value and establishing a reference range for said derived limit adherence value.

The method comprises selecting the driving torque value corresponding to the limit adherence value derived included within the reference range.

In other words, the grip value is derived and verified to fall within the reference range, to verify that the grip value found is sufficiently stable and reliable.

The method may comprise calculating an acceleration of the tyre as a function of the measured rotation speed of the tyre.

Determining the limit adherence value comprises determining the limit adherence value as a function of the acceleration calculated.

Advantageously, the acceleration is calculated by deriving the measured rotation speed.

The method preferably comprises calculating a moment of inertia of a propulsion system of the vehicle.

This propulsion system of the vehicle includes the motor, a possible transmission and the tyre.

Determining the limit adherence value comprises determining the limit adherence value as a function of the moment of inertia calculated.

Advantageously, determining the value of grip limit as a function of the calculated moment of inertia allows an accurate and precise grip value to be estimated at the position and surface where the vehicle is located.

The method may comprise calculating a resistant torque value as a function of moment of inertia, speed and driving torque.

The expression resistant torque refers to the resistant torque at the tyre and asphalt interface.

The resistant torque is the torque that must be overcome by increasing the driving torque.

When the driving torque exceeds the resistant torque, the tyre starts to move.

Determining the limit adherence value comprises determining the limit adherence value as a function of the resistant torque.

The method may comprises determining a vertical load acting on the unlocked tyre at least as a function of a mass of the vehicle, of a wheelbase of the vehicle, of a distance between an axis of a locked tyre in line with the unlocked tyre and a centre of mass of the vehicle.

In other words, if the unlocked tyre is the rear right tyre, the distance must be calculated between the axis of the locked front right tyre to the centre of mass.

The method may comprise determining a longitudinal load acting on the unlocked tyre as a function of the value of the resistant torque and of a diameter of the unlocked tyre.

Determining the limit adherence value comprises determining the limit adherence value as a function of the vertical load and of the horizontal load. The method may comprise setting a speed threshold value in the skid condition and determining the driving torque value at the speed threshold value.

This threshold value is established following a calibration. Advantageously, setting a first threshold value allows a significant rotation speed value of the tyre to be identified.

At low driving torque values it may be difficult for the speed sensor to detect the rotation speed of the tyre.

Advantageously, the threshold value avoids the grip limit estimate being subject to errors due to the presence of tyre *stick slip* phenomena, caused by the continuous transition from static to dynamic friction and vice versa of the tyre.

The method may comprise maintaining the driving torque value constant after reaching the skid condition.

The method comprises setting a speed threshold value of the rotation speed in the skid condition.

The method may comprise determining the driving torque value at the threshold value.

The method may comprise keeping constant the driving torque value obtained from a first speed threshold value.

Advantageously, this operation allows the reaching of the skid state to be better verified.

According to one aspect, the invention relates to a vehicle comprising a plurality of tyres.

The vehicle comprises at least one motor configured to provide a driving torque to at least one first tyre of the plurality of tyres.

In one example, the motor is an electric motor.

Preferably, the vehicle is a four-wheeled vehicle and the motor comprises an electric motor for each wheel.

The vehicle comprises a braking system configured to define a stationary condition of the vehicle.

The vehicle comprises at least one rotation speed sensor associated with the first tyre.

The speed sensor is configured to measure the rotation speed of the first tyre and generate a significant signal of the rotation speed.

The vehicle comprises a control unit in communication with the motor and with the speed sensor.

The control unit is configured to receive the rotation speed signal and determine a value of grip limit by implementing an estimation method according to the above aspect.

Further features of the invention are more apparent from the non-limiting description which follows of a preferred embodiment as illustrated in the accompanying drawings, in which:

- Figure 1 illustrates a schematic view of a vehicle in accordance with the present invention;
- Figures 2 and 3 illustrate a variation of a driving torque and of a resistant torque over time and a variation of a speed of a tyre over time according to the method described in the present invention,
- Figure 4 illustrates a variation of grip limit estimated over time,
- Figure 5 illustrates a trend of the derived value of the grip limit illustrated in Figure 4 over time.

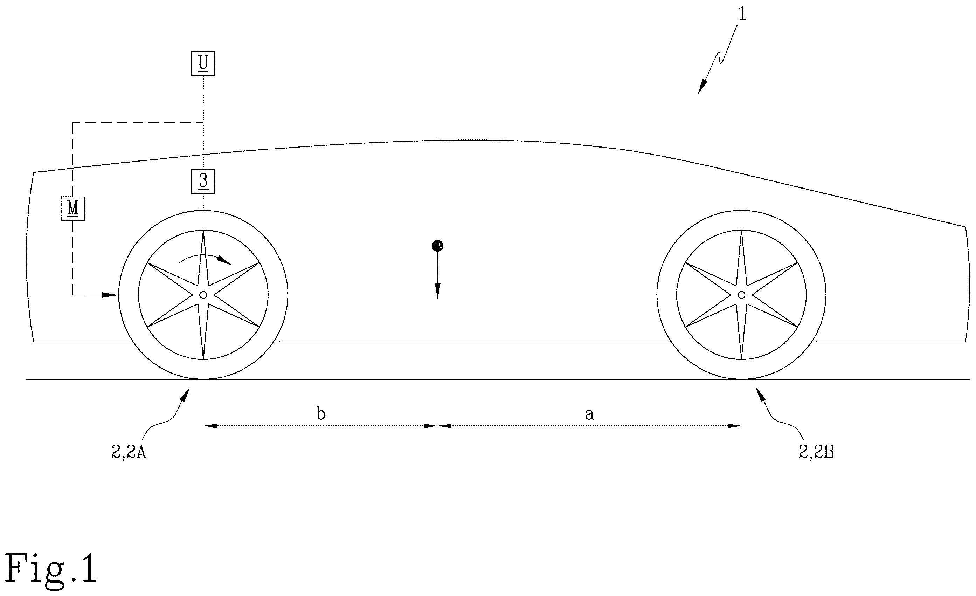

The reference numeral 1 in Figure 1 denotes a vehicle.

The vehicle 1 comprises a plurality of tyres 2.

The vehicle 1 comprises a motor for providing a driving torque to at least one tyre 2A of the plurality of tyres 2.

The motor comprises at least one motor M, to which explicit reference will be made below without restricting the scope of the invention, configured to provide a driving torque to at least one tyre 2A of the plurality of tyres 2.

In a preferred embodiment, the motor M is an electric motor. The motor M can power only the tyre 2A or power all the tyres 2.

Preferably, the vehicle 1 is four-wheeled vehicle each powered by a corresponding electric motor M.

The vehicle 1 comprises a braking system (not shown) configured to lock, by braking, the plurality of tyres 2.

The braking system is configured to release at least the tyre 2A independently of the tyres 2.

Each tyre 2 can be associated with a brake independently of the other brakes acting on the remaining tyres 2.

A braking system can be defined that allows one or more tyres of the plurality of tyres to be selectively locked.

The vehicle 1 comprises at least one rotation speed sensor 3 associated with the tyre 2A.

The speed sensor 3 is configured to measure the rotation speed of the tyre 2A and generate a significant signal S3 of the rotation speed.

The vehicle 1 comprises a control unit U in communication with the motor

M and with the speed sensor 3.

The control unit U is configured to receive the rotation speed signal S3 and determine a value of grip limit $\mu$ at least as a function of the torque supplied by the motor M and the rotation speed signal S3.

The control unit U is in communication with the motor M and with the speed sensor and is configured to receive the signal of the rotation speed Vr and determine the value of grip limit $\mu$ implementing an estimation method as described below.

The invention relates to a method for estimating a value of grip limit $\mu$ of a tyre of a vehicle 1 comprising a plurality of tyres 2.

The method comprises defining a stationary vehicle condition.

Preferably, defining a stationary vehicle condition comprises locking all the tyres 2 of the plurality of tyres.

The method comprises unlocking at least one tyre 2A of the plurality of tyres 2, in particular if they have all been locked to define the stationary vehicle condition.

The method comprises providing a driving torque to the unlocked tyre 2A. The unlocked tyre 2A may be a tyre that was first locked by the braking system or other system then unlocked or may be a tyre that was not locked in defining the stationary vehicle condition.

The driving torque Tm is provided by a motor M associated at least with the tyre 2A.

The method comprises increasing the driving torque Tm provided until the unlocked tyre 2A reaches a skid condition.

The method comprises measuring at least one rotation speed Vr of the unlocked tyre 2A at the skid condition.

The rotation speed Vr of the unlocked tyre 2A due to the driving torque Tm received from the motor M is measured by the sensor 3.

The method comprises determining the value of grip limit $\mu$ at least as a function of the rotation speed Vr measured and the value of the driving torque Tm determined.

This value is obtained by means of a processing of a control unit U that receives the information of the driving torque Tm from the motor M and of the speed Vr from the sensor 3.

The method comprises determining a value of driving torque Tm at the rotation speed Vr measured.

In one embodiment, the method comprises calculating an acceleration of the unlocked tyre 2A as a function of the rotation speed Vr of the tyre 2A measured.

According to this embodiment, determining the value of grip limit $\mu$ comprises determining the value of grip limit $\mu$ as a function of the acceleration calculated.

The acceleration is obtained as a derivative of the rotation speed Vr measured.

In one embodiment, the method comprises calculating a moment of inertia of a propulsion system of the vehicle.

According to this embodiment, determining the value of grip limit $\mu$ comprises determining the value of grip limit $\mu$ as a function of the moment of inertia calculated.

The moment of inertia depends on the characteristics of the vehicle to which the tyre is coupled.

In one embodiment, the method comprises calculating a resistant torque value Tr as a function of the moment of inertia, the speed Vr and the driving torque Tm.

The resistant torque Tr is the torque acting on the tyre 2A-asphalt interface. In particular, the value of resistant torque Tr is calculated according to the following equation:

$$Tr = Tm - J * a$$

wherein

Tr is the resistant torque,
Tm is the driving torque,
J is the moment of inertia,
a is the acceleration.

The resistant torque Tr is calculated considering the equilibrium at the rotation of the tyre and transmission unit of the driving torque Tm up to the rotor of the motor M.
According to this embodiment, determining the value of grip limit $\mu$ comprises determining the value of grip limit $\mu$ as a function of the resistant torque Tr.
In one embodiment, the method comprises determining a vertical load acting on the unlocked tyre 2A at least as a function of a mass of the vehicle 1, of a wheelbase of the vehicle 1, of a distance between an axis of a locked tyre 2B in line with the tyre 2A and a centre of mass of the vehicle 1.
In particular, with reference to Figure 1, the vertical load acting on the tyre 2A is calculated according to the following equation:

$$Fz = m*g *b/l /2 \quad \text{(if 2A is a front tyre)}$$

$$Fz = m*g *a/l/2 \quad \text{(if 2A is a rear tyre)}$$

wherein

Fz is the vertical load,
m is a mass of the vehicle,
l is a wheel base of the vehicle,
g is a universal gravitational constant,
a is a distance of a front axle from a centre of gravity of the vehicle,
b is a distance of a rear axle from a centre of gravity of the vehicle.

In one embodiment, the method comprises determining a longitudinal load acting on the unlocked tyre as a function of the resistant torque and of a diameter of the tyre.
In particular, the longitudinal load acting on the tyre 2A is calculated according to the following equation:

$$Fx = Tr / Wr$$

wherein

Fx is the longitudinal load,
Tr is the resistant torque,

Wr is a radius of the tyre.

Determining the value of grip limit $\mu$ comprises determining the value of grip limit $\mu$ as a function of the vertical load and of the horizontal load.
In particular, the value of grip limit $\mu$ can be calculated as longitudinal load versus vertical load.
In one embodiment, the method comprises setting a speed threshold value Vr_1 in the skid condition and determining the driving torque value Tm at the speed threshold value Vr_1.
The method comprises deriving the value of grip limit $\mu$ and establishing a reference range for the derived value of grip limit $\delta\mu$.
This reference range makes it possible to verify when the value of grip limit $\mu$ has stabilised.
Preferably said range is defined around zero.
The value of grip limit $\mu$ may, in fact, undergo several oscillations during the test until it reaches a substantially stable value.
In order to assess whether the value of grip limit $\mu$ has stabilised, it is useful to use the derived value of grip limit $\delta\mu$ to check whether this value falls within the established reference range.
The method comprises selecting the value of driving torque Tm corresponding to the derived value of grip limit $\delta\mu$ included in the reference range.
In one embodiment, the method comprises maintaining the driving torque value constant after reaching the skid condition.
In an embodiment, the method comprises keeping constant the value of driving torque Tm obtained from a first speed threshold value Vr_1.

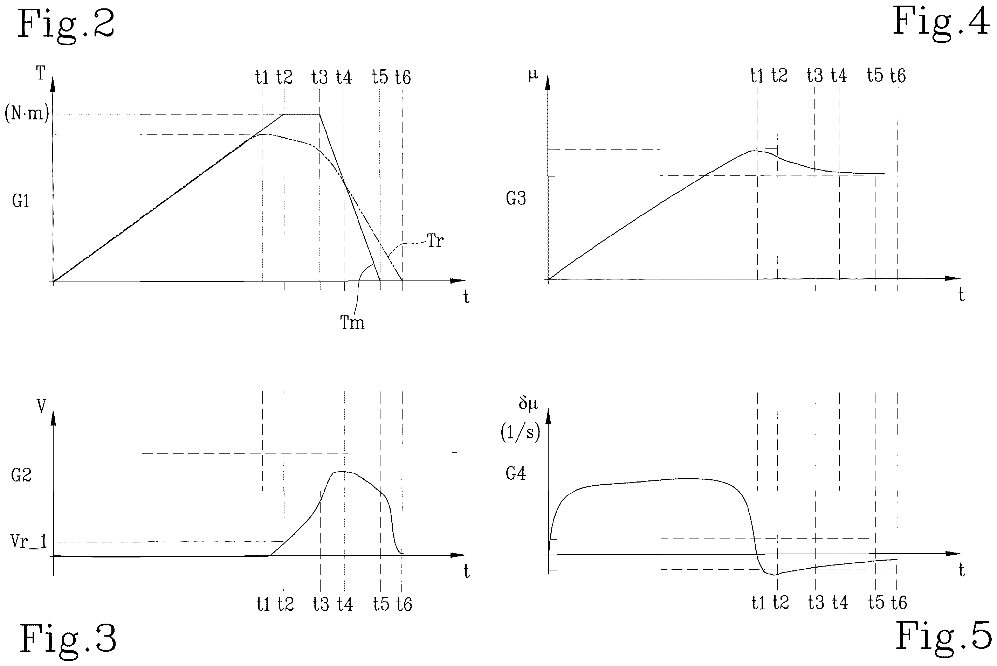

Figure 2 illustrates a graph G1 of the trend of the driving torque Tm as a function of time (solid line) and of the resistant torque Tr as a function of time (dotted line).
Figure 3 illustrates a graph G2 of the trend of the rotation speed Vr of the tyre 2A as a function of time.
From the graph G1 and G2 three times t1, t2 and t3 are distinguished.
Starting from t1, the increase in the driving torque Tm determines a movement of the tyre 2A.
The resistant torque Tr is then overcome by the driving torque Tm, in fact, the curve relative to the resistant torque Tr adopts a decreasing trend starting from t1.
Between t1 and t2, the driving torque Tm continues to increase.
For example, the driving torque Tm can be increased until the threshold value Vr_1 is reached.
At t2 the tyre 2A reaches the rotation speed of the threshold value Vr_1. This threshold value Vr_1 is established by calibration.
Between t2 and t3 the driving torque Tm is kept constant.
Since the evolution of the wheel speed is highly oscillatory, providing a constant torque phase allows a value of grip limit estimate to be obtained that is as precise and stable as possible.

The torque from time t3 is progressively reduced.

Figure 4 illustrates a graph G3 of the grip limit μ as a function of time.

The peak of grip limit μ generally occurs between t1 and t2.

This value may not be easy to identify and may present inaccuracies, for this reason the value of grip limit μ can continue to be calculated up to times t3, t4, t5 until the value of grip limit adopts a stable value, that is, it stabilises on an asymptotic value.

Figure 5 illustrates a graph G4 of the derivative value δμ of the grip limit as a function of time.

This graph G4 can be useful to better identify when the value of grip limit stabilises.

In fact, when the derivative δμ of grip limit falls within a certain reference range, the value of grip limit can be considered substantially stable.

The end-of-test condition can in fact be determined from this graph G4, by monitoring the fact that the derivative δμ of grip limit falls below a threshold for a certain time.

## Claims

1. An estimation method for estimating a value of grip limit of a tyre (2A) of a vehicle (1) comprising a plurality of tyres (2), the estimation method comprising:

   - defining a stationary vehicle condition,
   - provide a driving torque (Tm) to a first tyre (2A) of the plurality of tyres,
   - increasing the driving torque (Tm) provided until the first tyre (2A) reaches a skid condition,
   - measuring at least one rotation speed (Vr) of the first tyre (2A) at the skid condition,
   - determining a value of driving torque (Tm) at the rotation speed measured,
   - determining the value of grip limit (μ) at least as a function of the measured rotation speed (Vr) and of the determined driving torque (Tm), said estimation method being **characterised in that** it comprises deriving the value of grip limit (μ) and establishing a reference range for said derived value of grip limit (δμ), the estimation method comprising selecting the value of driving torque (Tm) corresponding to the value of derived grip limit (δμ) within the reference range.

2. The estimation method according to claim 1, comprising calculating an acceleration of the first tyre as a function of the tyre rotation speed (Vr) measured, where determining the value of grip limit (μ) comprises determining the value of grip limit (μ) as a function of the acceleration calculated.

3. The estimation method according to claim 1 or 2, comprising calculating a moment of inertia of a propulsion system of the vehicle, where determining the value of grip limit (μ) comprises determining the value of grip limit (μ) as a function of the moment of inertia calculated.

4. The estimation method according to claim 3, comprising calculating a value of resistant torque (Tr) as a function of the moment of inertia, of the rotation speed (Vr) and of the value of the driving torque (Tm), where determining the value of grip limit (μ) comprises determining the value of grip limit (μ) as a function of the value of the resistant torque (Tr).

5. The estimation method according to claim 4, comprising:

   - determining a vertical load acting on the unlocked tyre (2A) at least as a function of a mass of the vehicle (1), of a wheelbase of the vehicle (1), of a distance between an axis of a locked tyre (2B) in line with the first tyre (2A) and a centre of mass of the vehicle (1),
   - determining a longitudinal load acting on the first tyre as a function of the value of the resistant torque (Tr) and of a diameter of the first tyre (2A),

   where determining the value of grip limit (μ) comprises determining the value of grip limit (μ) as a function of the vertical load and of the horizontal load.

6. The method according to any one of the preceding claims, comprising keeping the value of driving torque (Tm) constant after reaching the skid condition.

7. The estimation method according to any one of the preceding claims, comprising fixing a speed threshold value (Vr_1) of the rotation speed (Vr) in the skid condition and determining the value of driving torque (Tm) at the speed threshold value (Vr_1).

8. The estimation method according to claim 7, comprising keeping constant the value of driving torque (Tm) obtained from a first speed threshold value (Vr_1).

9. The estimation method according to any one of the preceding claims, wherein defining the stationary vehicle condition comprises locking at least a part of the tyres of said plurality of tyres, said first tyre being an unlocked tyre.

10. The estimation method according to any one of the preceding claims, wherein defining the stationary vehicle condition comprises locking all the tyres (2) of the plurality of tyres and unlocking at least said first tyre (2A) of the plurality of tyres (2).

**11.** A vehicle comprising:

- a plurality of tyres (2),
- at least one motor configured to provide a driving torque (Tm) to at least a first tyre (2A) of the plurality of tyres (2),
- a braking system configured to define a stationary vehicle condition,
- at least one rotation speed sensor (3) associated with the first tyre, said speed sensor (3) being configured to measure the rotation speed of the first tyre (2A) and to generate a significant signal (S3) of the rotation speed (Vr),
- a control unit (U) in communication with the motor (M) and with the speed sensor, the control unit being configured to receive the signal of the rotation speed (Vr) and determine a value of grip limit (μ) implementing an estimation method according to any one of the preceding claims.

**12.** The vehicle according to claim 11, wherein the vehicle is a four-wheeled vehicle and the motor comprises an electric motor for each wheel.

Fig.1

# Fig.2

# Fig.4

# Fig.3

# Fig.5

EP 4 763 648 A1

Europäisches
Patentamt
European
Patent Office
Office européen
des brevets

# EUROPEAN SEARCH REPORT

**Application Number**

EP 25 22 5034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/248370 A1 (CUNNINGHAM ANDREW [US] ET AL) 15 August 2019 (2019-08-15) * paragraph [0050] - paragraph [0084]; figures 1-3 * ----- | 1-12 | INV. B60W30/18 B60W40/064 B60W40/068 |
| A | US 2018/217050 A1 (HEIL EDWARD T [US] ET AL) 2 August 2018 (2018-08-02) * paragraph [0032] - paragraph [0033]; figures 6,8 * * the whole document * ----- | 1-12 | |
| A | US 2016/090095 A1 (MOMOSE MASAHIRO [JP]) 31 March 2016 (2016-03-31) * paragraph [0098] - paragraph [0100]; figure 4 * * the whole document * ----- | 1-12 | |
| A | US 2011/295457 A1 (LINDA JEAN-LOUIS [CH] ET AL) 1 December 2011 (2011-12-01) * paragraph [0065] - paragraph [0066]; figure 8 * * the whole document * ----- | 1-12 | TECHNICAL FIELDS SEARCHED (IPC) B60W |

The present search report has been drawn up for all claims

| Place of search | Date of completion of the search | Examiner |
|---|---|---|
| Munich | 27 April 2026 | Engelhardt, Helmut |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 22 5034

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2026

| Patent document cited in search report | Publication date | Patent family member(s) | | Publication date |
|---|---|---|---|---|
| US 2019248370 A1 | 15-08-2019 | CN | 110126828 A | 16-08-2019 |
| | | DE | 102019102971 A1 | 14-08-2019 |
| | | US | 2019248370 A1 | 15-08-2019 |
| US 2018217050 A1 | 02-08-2018 | CN | 108375540 A | 07-08-2018 |
| | | DE | 102018101691 A1 | 02-08-2018 |
| | | US | 2018217050 A1 | 02-08-2018 |
| US 2016090095 A1 | 31-03-2016 | CN | 105459990 A | 06-04-2016 |
| | | JP | 6272203 B2 | 31-01-2018 |
| | | JP | 2016070235 A | 09-05-2016 |
| | | US | 2016090095 A1 | 31-03-2016 |
| US 2011295457 A1 | 01-12-2011 | CN | 101855116 A | 06-10-2010 |
| | | EP | 2209686 A1 | 28-07-2010 |
| | | FR | 2923596 A1 | 15-05-2009 |
| | | KR | 20100084651 A | 27-07-2010 |
| | | US | 2011295457 A1 | 01-12-2011 |
| | | WO | 2009060093 A1 | 14-05-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019248370 A1

- US 2018217050 A